# EUROPÄISCHE PATENTSCHRIFT

(11) **EP 1 600 382 B1**
(45) Veröffentlichungstag und Bekanntmachung des Hinweises auf die Patenterteilung: **07.03.2007**
(21) Anmeldenummer: 04012822.5
(22) Anmeldetag: 29.05.2004
(51) Int. Cl.: B65B 51/30, B29C 65/18, B65B 65/02

(54) **Vorrichtung zum Verschweissen einer umgeformten Folienbahn**
Apparatus for welding a preformed film
Dispositif pour le soudage d'un film mis en forme

(43) Veröffentlichungstag der Anmeldung: 30.11.2005
(73) Patentinhaber: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- EP-A- 0 297 636
- EP-A- 0 368 016
- US-A- 4 291 520
- US-A- 4 622 798
- US-A- 5 653 085

## Beschreibung

Die Erfindung betrifft eine Vorrichtung zum Verschweißen einer umgeformten Folienbahn, insbesondere eines Folienschlauches, mit gegeneinander bewegbaren Schweißbacken gemäß dem Oberbegriff des Anspruchs 1.

Es ist bekannt, einen Folienschlauch an einer vertikalen Schlauchbeutelmaschine mittels Schweißbacken quer zur Transportrichtung des Folienschlauches zu verschweißen. Derart werden Kopf- und Bodennähte befüllter Schlauchbeutel erzeugt. Mittels einer Trenneinrichtung in einer der gegeneinander gedrückten und den Folienschlauch zwischen sich einklemmenden Schweißbacken wird jeweils ein erzeugter Schlauchbeutel vom Folienschlauch getrennt. Zudem ist eine Vielzahl an Getrieben bekannt, welche für die Bewegung der Schweißbacken sorgen. Ein Getriebe dient einer Umsetzung der Bewegung eines Antriebsteils hin zur Bewegung der Schweißbacken.

Aus der DE 196 27 892.9 ist eine Vorrichtung gemäß dem Oberbegriff des Anspruchs 1 bekannt. Bei dieser Vorrichtung ist ein linear verschiebbares, bewegliches Element eines Antriebs dazu vorgesehen, die Schweißbackenbewegung zu erzeugen. Zwischen dem beweglichen Element und den Schweißbacken ist ein relativ kompliziertes und somit kostenintensives Getriebe vorgesehen, welche als zentrale Einheit eine um einen zentralen Drehpunkt drehbare starre Verbindung aufweist. Diese starre Verbindung sorgt stets für die entgegengesetzte Bewegung der Schweißbacken zueinander. Diese Vorrichtung nutzt Hebelkräfte aus, um einen erhöhten Schweißdruck zu erzeugen.

Aus der DE 39 07 208 A ist dagegen ein Getriebe bekannt, das mit relativ wenig Bauelementen eine um einen zentralen Drehpunkt drehbare starre Verbindung nutzt, um eine gegenläufige Backenbewegung zu erzeugen. Diese Technik hat die Nachteile, dass sie nicht für ein linear verschiebbares Element eines Linearmotors geeignet ist, und dass sie keinen Hebel zur Erzeugung eines relativ großen Backendruckes aufweist.

Der Erfindung liegt die Aufgabe zugrunde, eine Vorrichtung gemäß dem Oberbegriff des Anspruchs 1 dahingehend weiterzubilden, dass die Vorrichtung einfacher und damit kostengünstiger wird.

Gelöst ist die Aufgabe gemäß dem kennzeichnenden Teil des Anspruchs 1. Es ist ein Gelenk am beweglichen Element vorgesehen, an dem ein Hebel angelenkt ist. Erfindungsgemäß ist dieser Hebel über ein weiteres Gelenk und ein Verbindungsstück mit einem Drehgelenk der Verbindung verbunden, und das Verbindungsstück stellt eine mechanische Verlängerung des Teils der Verbindung dar, welcher sich zwischen dem Drehpunkt und dem Drehgelenk erstreckt.

Die erfindungsgemäße Vorrichtung hat den Vorteil, dass sie relativ einfach und somit kostengünstig ist, da sie aus relativ wenigen einfachen Bauelementen zusammengesetzt ist. Sie weist zudem einen Hebelmechanismus auf, welcher die vom Antrieb bereitgestellte Kraft verstärkt. Dazu wird eine Hebelkraft genutzt, die dadurch zustande kommt, dass die starre, um den zentralen Drehpunkt schwenkbare Verbindung, auch Drehkreuz genannt, einseitig mittels des Verbindungsstückes verlängert wird. Der Abstand zwischen dem Drehpunkt und dem weiteren Gelenk ist größer als der Abstand zwischen dem Drehpunkt und dem Drehgelenk, an welchem eine mit einem Träger einer Schweißbacke verbundene Stange angelenkt ist. Diese aufgrund des Verbindungsstückes gewonnene Drehmomentvergrößerung führt zu einer Vergrößerung der vom beweglichen Element des Antriebs ausgeübten, und der Hebel bewirkt eine Vergrößerung des Backendruckes. Dieser Druck wird zudem über die beiden Drehgelenke der starren Verbindung in gleicher weise auf die beiden Träger und damit auf die beiden Schweißbacken übertragen.

Weitere, vorteilhafte Ausgestaltungen der vorgeschlagenen Vorrichtung sind in den Ansprüchen 2 bis 4 beschrieben.

Ist die Bewegungsrichtung des beweglichen Elementes gleich der Bewegungsrichtung der Schweißbacken (Anspruch 2), so wird eine besonders schnelle Umsetzung der Bewegung des Antriebes für eine Backenbewegung erreicht.

Ist die Bewegungsrichtung des beweglichen Elementes des Antriebs eine Horizontale, und die gesamte Vorrichtung mittels eines weiteren Antriebs in vertikaler Richtung verschiebbar (Anspruch 3), so wird neben einer Bewegung der Schweißbacken in horizontaler Richtung, in der die Schweißbacken geschlossen und geöffnet werden, noch eine Bewegung der Schweißbacken in vertikaler Richtung ermöglicht. Derart können die Schweißbacken in geschlossener Stellung mit einem zu verschweißenden Folienschlauch nach unten mitgeführt werden, und nach einer Backenöffnung wieder nach oben an den nach unten weitertransportierten Folienschlauch gebracht werden, um eine nachfolgende Querverschweißung des Folienschlauches auszuführen.

Als Antriebe eignen sich insbesondere Linearmotore (Anspruch 4). Diese sind sehr schnell und können daher zu einer sehr schnellen Folienverarbeitung genutzt werden.

Im folgenden wird die Erfindung an Hand ein Ausführungsbeispiel darstellender Figuren näher beschrieben. Es zeigt:
- Figur 1: in einer Ansicht von oben eine Vorrichtung zum Verschweißen eines Folienschlauches mit zwei gegeneinander in horizontaler Richtung bewegbaren Schweißbacken, welche gegeneinander bewegt werden, um den Folienschlauch zwischen ihren Siegelflächen einzuklemmen, und um aufeinander liegende Bereiche des Folienschlauches gegeneinander zu drücken und miteinander zu verschweißen, wobei die Vorrichtung einen Antrieb und eine krafterhöhende Mechanik zum Übertragen der Antriebskraft auf die Schweißbacken aufweist;
- Figur 2: in einer Seitenansicht einen Ausschnitt aus dem Gegenstand der Figur 1, zusätzlich mit einem weiteren Antrieb zum Heben und Senken der Vorrichtung der Figur 1, sowie
- Figur 3: in einer Seitenansicht eine mögliche Backenbewegung beim Gegenstand der Figur 2.

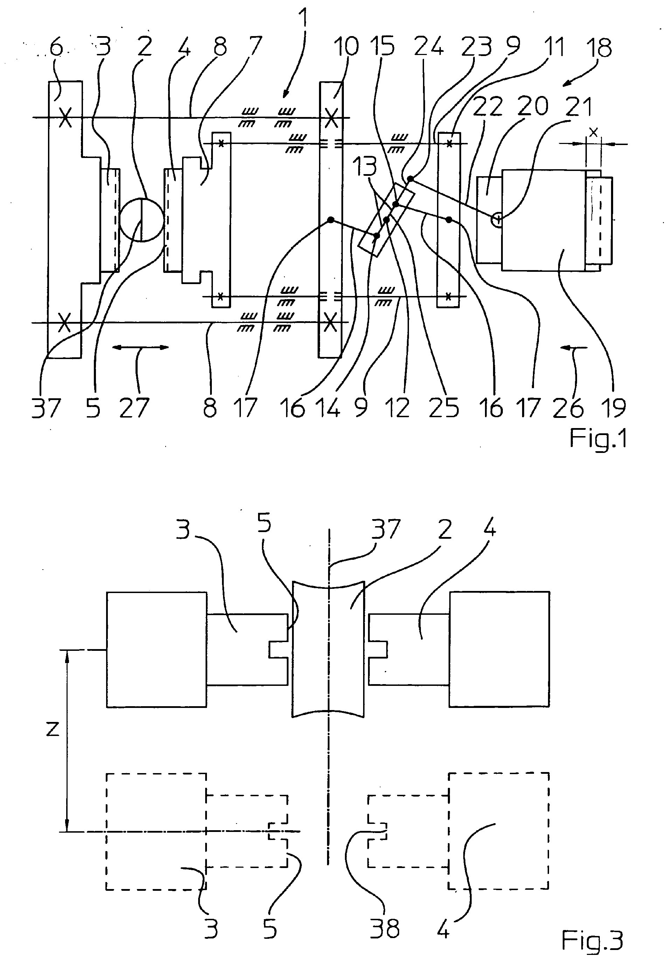

Bei einer Vorrichtung 1 zum Verschweißen einer zu einem Folienschlauch 2 umgeformten Folienbahn, wobei die Vorrichtung 1 Teil einer vertikalen Schlauchbeutelmaschine ist, werden zwei Schweißbacken 3, 4, welche die Folienbahn zwischen ihren Siegelflächen 5 einklemmen, gegeneinander bewegt, um aufeinander liegende Bereiche der Folienbahn gegeneinander zu drücken und miteinander zu verschweißen (Figur 1). Jeweils ein Backenträger 6, 7 dient zur Aufnahme einer Schweißbacke 3, 4. Jeder Backenträger 6, 7 ist über eine Schubverbindung 8, 9 mit einem weiteren Träger 10, 11 verbunden. Zwischen den Trägem 10, 11 ist eine Verbindung vorgesehen, welche eine um einen Drehpunkt 12 drehbare starre Verbindung 13 aufweist. An gegenüberliegenden Seiten der Verbindung 13 ist jeweils ein Drehgelenk 14, 15 vorgesehen. Jeweils eine Stange 16 verbindet ein Drehgelenk 14, 15 mit einem Gelenkpunkt 17 eines Trägers 10, 11. Ein Antrieb 18 mit einem stationären Element 19 und einem beweglichen Element 20 dient dem Backenantrieb. Am beweglichen Element 20 ist ein Gelenk 21 zur Aufnahme eines Hebels 22 vorgesehen. Der Hebel 22 ist mit dem Drehpunkt 12 verbunden, und zwar über ein weiteres Gelenk 23 und ein Verbindungsstück 24, um eine größere Hebelkraft auf die starre Verbindung 13 auszuüben. Das Verbindungsstück 24 ist eine mechanische Verlängerung des Teils 25 der Verbindung 13, welcher sich zwischen dem Drehpunkt 12 und dem Drehgelenk 15 erstreckt. Wird das bewegliche Element 20 um einen Betrag x in horizontaler Bewegungsrichtung 26 nach links bewegt, so bewegen sich die Schweißbacken 3, 4 bezüglich deren Bewegungsrichtung 27 aufeinander zu. Dabei sorgt der Hebel 22, der die um das Verbindungsstück 24 verlängerte Verbindung 13 um den Drehpunkt 12 dreht, für einen relativ großen Schweißdruck.

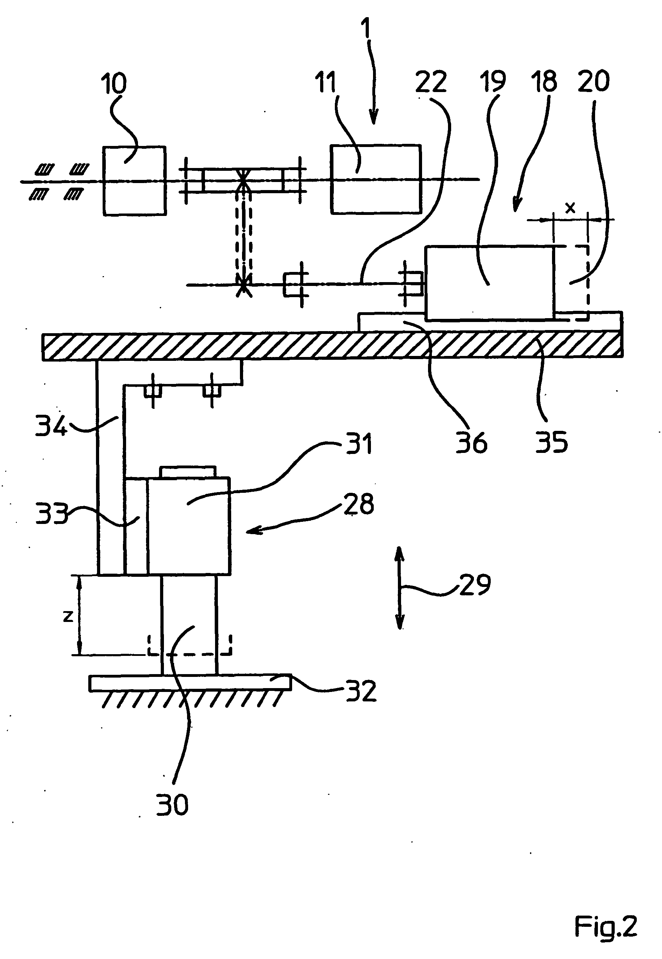

Die gesamte in Figur 1 dargestellte Vorrichtung 1 kann mittels eines weiteren Antriebs 28 zusätzlich in vertikaler Richtung 29 verschoben werden (Figur 2). Der weitere Antrieb 28 ist ebenso wie der erste Antrieb 18 ein Linearmotor mit einem stationären Element 30 und einem beweglichen Element 31. Das stationäre Element 30 ist an einer Bodenplatte 32 befestigt. Das bewegliche Element 31 ist über Verbindungselemente 33, 34 mit einem Rahmen 35 der Vorrichtung 1 der Figur 1 verbunden und kann dadurch die Schweißbacken 3, 4 mitsamt Getriebe und Antrieb 18 (auf Befestigungselement 36 montiert) um die Strecke z nach oben bzw. Unten bewegen. Da gleichzeitig das bewegliche Element 20 des Antriebs 18 um die Strecke x ausgelenkt werden kann, sind entsprechende Backenbewegungen realisierbar. So können die Schweißbacken 3, 4 in horizontaler x-Richtung gegeneinander auf die Schlauchmitte 37 zu bewegt werden, um sodann in geschlossener Position nach unten in z-Richtung mit dem Folienschlauch 2 mitbewegt zu werden, um einen Schweißvorgang auszuführen. Dabei wird ein erzeugter (nicht dargestellter) Beutel mittels einer Trenneinrichtung 38 vom Folienschlauch 2 abgetrennt. Nachdem die Schweißbacken 3, 4 in ihrer unteren Position wieder auseinander gefahren sind (gestrichelt dargestellt), werden sie wieder nach oben gesetzt, um einen nachfolgenden Schweißvorgang auszuüben.
- 1: Vorrichtung
- 2: Folienschlauch
- 3, 4: Schweißbacke
- 5: Siegelfläche
- 6, 7: Backenträger
- 8, 9: Schubverbindung
- 10, 11: Träger
- 12: Drehpunkt
- 13: Verbindung
- 14, 15: Drehgelenk
- 16: Stange
- 17: Gelenkpunkt
- 18: Antrieb
- 19: stationäres Element
- 20: bewegliches Element
- 21: Gelenk
- 22: Hebel
- 23: Gelenk
- 24: Verbindungsstück
- 25: Teil
- 26: horizontale Bewegungsrichtung
- 27: Bewegungsrichtung
- 28: Antrieb
- 29: vertikale Richtung
- 30: stationäres Element
- 31: bewegliches Element
- 32: Bodenplatte
- 33, 34: Verbindungselement
- 35: Rahmen
- 36: Befestigungselement
- 37: Schlauchmitte
- 38: Trenneinrichtung

## Patentansprüche

1. Vorrichtung zum Verschweißen einer umgeformten Folienbahn, insbesondere eines Folienschlauches (2), mit zwei gegeneinander bewegbaren Schweißbacken (3, 4), welche die Folienbahn zwischen ihren Siegelflächen (5) einklemmen, um aufeinander liegende Bereiche der Folienbahn gegeneinander zu drücken und miteinander zu verschweißen, jeweils einem Backenträger (6, 7) zur Aufnahme der Schweißbacken (3, 4), wobei jeder Backenträger (6, 7) über eine Schubverbindung (8, 9) mit einem weiteren Träger (10, 11) verbunden ist, zwischen den Trägem (10, 11) eine Verbindung vorgesehen ist, welche eine um einen Drehpunkt (12) drehbare starre Verbindung (13) aufweist, wobei an der Verbindung (13) an gegenüberliegenden Seiten der Verbindung (13) jeweils ein Drehgelenk (14, 15) vorgesehen ist, und jeweils eine Stange (16) ein Drehgelenk (14, 15) mit einem Gelenkpunkt (17) eines Trägers (10, 11) verbindet, sowie mit einem Antrieb (18) mit einem beweglichen Element (20), an welchem ein Gelenk (21) zur Aufnahme eines Hebels (22) vorgesehen ist, und der Hebel (22) mit dem Drehpunkt (12) verbunden ist, **dadurch gekennzeichnet, dass** der Hebel (22) über ein weiteres Gelenk (23) und ein Verbindungsstück (24) mit einem Drehgelenk (15) der Verbindung (13) verbunden ist, und das Verbindungsstück (24) eine mechanische Verlängerung des Teils (25) der Verbindung (13) darstellt, welcher sich zwischen dem Drehpunkt (12) und dem Drehgelenk (15) erstreckt..

2. Vorrichtung nach Anspruch 1, **dadurch gekennzeichnet, dass** die Bewegungsrichtung (26) des beweglichen Elementes (20) gleich der Bewegungsrichtung (27) der Schweißbacken (3, 4) ist.

3. Vorrichtung nach Anspruch 2, **dadurch gekennzeichnet, dass** die Bewegungsrichtung (26) des beweglichen Elementes (20) des Antriebs (18) eine Horizontale ist, und dass die gesamte Vorrichtung (1) mittels eines weiteren Antriebs (28) in vertikaler Richtung (29) verschiebbar ist.

4. Vorrichtung nach Anspruch 3, **dadurch gekennzeichnet, dass** Linearmotoren als Antriebe (18, 28) vorgesehen sind.

## Claims

1. A device for welding a formed foil web, particularly a foil tube (2), comprising two welding jaws (3, 4), movable towards one another, which clamp the foil web between their sealing surfaces (5) in order to press regions of the foil web lying one on top of the other towards one another and to weld them together, respective jaw supports (6, 7) for holding the welding jaws (3, 4), each jaw support (6, 7) being connected via a sliding connection (8, 9) to a further support (10, 11), a connection between provided between the supports (10, 11) which has a rigid connection (13), rotatable around a pivot (12), respective swivel joints (14, 15) being provided on the connection (13) on opposite sides of the connection (13), and respective rods (16) connecting a swivel joint (14, 15) to an articulation point (17) of a support (10, 11), and a drive (18) with a movable element (20), on which a joint (21) is provided for holding a lever (22), and the lever (22) is connected to the pivot (12), **characterised in that** the lever (22) is connected via a further joint (23) and a connecting piece (24) to a swivel joint (15) of the connection (13), and the connecting piece (24) represents a mechanical extension of the part (25) of the connection (13) that extends between the pivot (12) and the swivel joint (15).

2. A device according to Claim 1, **characterised in that** the direction of movement (26) of the movable element (20) is the same as the direction of movement (27) of the welding jaws (3, 4).

3. A device according to Claim 1, **characterised in that** the direction of movement (26) of the movable element (20) of the drive (18) is a horizontal, and **in that** the entire device (1) is displaceable by means of a further drive (28) in the vertical direction (29).

4. A device according to Claim 3, **characterised in that** linear motors are provided as drives (18, 28).

## Revendications

1. Dispositif destiné à la soudure d'une bande de film mise en forme, notamment d'un film tubulaire (2), avec deux mâchoires de soudure (3, 4) mobiles l'une contre l'autre qui serrent la bande de film entre leurs surfaces de scellement (5) pour presser l'une contre l'autre des zones de la bande de film posées l'une sur l'autre et pour les souder ensemble,
avec un support de mâchoires (6, 7) pour recevoir les mâchoires de soudure (3, 4), chaque support de mâchoires (6, 7) étant relié à un autre support (10, 11) par l'intermédiaire d'une liaison par poussée (8, 9), une liaison étant prévue entre les supports (10, 11) qui comporte une liaison (13) rigide mobile autour d'un axe de rotation (12), une articulation tournante (14, 15) étant prévue au niveau de la liaison (13) sur des côtés opposés de la liaison (13) et une tige (16) reliant une articulation tournante (14, 15) à un point d'articulation (17) d'un support (10, 11), et avec un entraînement (18) avec un élément mobile (20) sur lequel est prévue une articulation (21) pour le logement d'un levier (22), et le levier (22) étant relié à l'axe de rotation (12), **caractérisé en ce que** le levier (22) est relié à une articulation tournante (15) de la liaison (13) par une autre articulation (23) et une pièce de liaison (24) et la pièce de liaison (24) constitue un prolongement mécanique de la pièce (25) de la liaison (13) qui s'étend entre l'axe de rotation (12) et l'articulation tournante (15).

2. Dispositif selon la revendication 1, **caractérisé en ce que** le sens de déplacement (26) de l'élément mobile (20) est le même que le sens de déplacement (27) des mâchoires de soudure (3, 4).

3. Dispositif selon la revendication 2, **caractérisé en ce que** le sens de déplacement (26) de l'élément mobile (20) de l'entraînement (18) est une ligne horizontale et **en ce que** l'ensemble du dispositif (1) peut être déplacé dans le sens vertical (29) à l'aide d'un autre entraînement (28).

4. Dispositif selon la revendication 3, **caractérisé en ce que** des moteurs linéaires sont prévus comme entraînements (18, 28).
